# EUROPEAN PATENT APPLICATION

(11) **EP 3 835 834 A1**
(43) Date of publication of application: **16.06.2021**
(21) Application number: 21155332.6
(22) Date of filing: 22.12.2011
(51) Int. Cl.: G01V 1/38, B63B 1/04, B63G 8/00, B63G 8/16, B63G 8/18, B63G 8/42, B63B 21/26, B63H 5/15, B63H 5/125

(54) **SENSOR NODE**

(30) Priority: 23.12.2010 GB 201021902; 03.02.2011 GB 201101861
(62) Divisional of application: 11815771.8
(71) Applicant: Autonomous Robotics Limited, Warminster, Wiltshire BA12 9HW (GB)
(72) Inventor: GOSLING, Harry George Dennis, Bristol, South Gloucestershire BS35 3RW (GB)
(74) Representative: Ribeiro, James Michael

(57) **Abstract**

A sensor node for acquiring seismic data from the seabed, the sensor node comprising a central body carrying at least one seismic sensor; a pair of wings which extend from opposite sides of the central body and are shaped to generate hydrodynamic lift as the sensor node moves through the water; and one or more coupling devices for coupling the sensor node to the seabed so that the seismic sensor can acquire seismic data from the seabed.

## Description

### FIELD OF THE INVENTION

The present invention relates to methods of deploying and retrieving a seabed device such as a seismic sensor, a sensor node suitable for use in such methods, and a submersible vehicle for towing an object such as a seismic sensor. Although the terms "sea", "seabed" and "undersea device" are used herein, it is to be understood that the invention may be used in any body of water including lakes, rivers etc.

### BACKGROUND OF THE INVENTION

A method of deploying seismic sensor nodes is described in WO2006/106085. The nodes are dropped from a support vessel and the trajectory of the nodes is controlled by autonomous guiding equipment. The trajectory of each node can be controlled by movable rudders or by displacing a battery inside the structure of the node. A problem with this arrangement is that the nodes can only be deployed to a point directly below the support vessel, or close by.

Another method of deploying a seismic sensor node is described in WO 02/37140. The node has propulsion fins which transform to coupling and orientation units on the seabed where the fins dig into the sea floor to enhance coupling. A problem with this arrangement is that the node must have a recording housing, power unit, propulsion control unit and buoyancy control unit. These add weight, cost and complexity to the node.

A further method of deploying seismic sensor nodes is described in US 2006/0159524. In one embodiment a carrier containing a plurality of nodes is attached to a remotely operated vehicle (ROV). The ROV transports the nodes to the seabed where they are removed from the carrier and placed on the seabed. A problem with this method is that a complex carrier and deployment mechanism is required. In another embodiment, an ROV adjacent the seabed engages a deployment line extending from the vessel. The deployment line is used to guide nodes attached thereto down to the ROV for "on-time" delivery and placement on the seabed. A problem with this arrangement is that the nodes can only be deployed to a point directly below the support vessel, or close by.

In WO 01/73477, autonomous underwater vehicles (AUVs) deploy and receive seismic sensor nodes to the ocean bottom. Each AUV carries about 10km of spooled seismic sensor nodes and cable sections on a storage reel. The cable and sensor nodes are paid out from the storage reel and deployed on the ocean bottom. A problem with this method is that a complex storage reel and deployment mechanism is required.

### SUMMARY OF THE INVENTION

A first aspect of the invention provides a method of deploying a device on the seabed, the method comprising towing the device behind an undersea vehicle with a flexible tether; generating hydrodynamic lift with the device as it is towed behind the vehicle; and decelerating the vehicle so that the hydrodynamic lift reduces and the towed device sinks to the seabed.

A further aspect of the invention provides a method of retrieving a device from the seabed, the method comprising pulling the device off the seabed with a flexible tether behind an undersea vehicle; and towing the device away from the seabed behind the undersea vehicle with the flexible tether.

The device may comprise a single device, or a string of devices coupled nose-to-tail by flexible tethers.

The device may be any device which must be deployed to the seabed or retrieved from the seabed. For instance the device may comprise a sensor for acquiring data such as seismic data, acoustic data, temperature data, pressure data, salinity data, or electromagnetic data (e.g. for detecting the passage of a submarine); or a communication node.

A further aspect of the invention provides a method of acquiring seismic data from the seabed, the method comprising towing a sensor node behind an undersea vehicle with a flexible tether; generating hydrodynamic lift with the sensor node as it is towed behind the vehicle; decelerating the vehicle so that the hydrodynamic lift reduces and the towed sensor node sinks to the seabed; and acquiring seismic data from the seabed with the sensor node on the seabed.

A further aspect of the invention provides a method of acquiring seismic data from the seabed, the method comprising acquiring seismic data from the seabed with a sensor node on the seabed; and retrieving the sensor node from the seabed by pulling the device off the seabed with a flexible tether behind an undersea vehicle and towing the device away from the seabed behind the undersea vehicle with the flexible tether.

The method may further comprise parking the vehicle on the seabed adjacent to the sensor node. Alternatively the vehicle may return to the surface after the node has been deployed.

The data may be stored on the node, or more preferably the method further comprises transmitting the seismic data to the vehicle via the flexible tether; and storing the seismic data on the vehicle.

A further aspect of the invention provides a sensor node for acquiring seismic data from the seabed, the sensor node comprising at least one seismic sensor; means for generating hydrodynamic lift as the sensor node moves through the water; one or more coupling devices for coupling the sensor node to the seabed so that the seismic sensor can acquire seismic data from the seabed; and a flexible tether for towing the node through the water.

The means for generating lift may comprise an annular wing, or the node may comprise a central body carrying the seismic sensor(s) and the means for generating hydrodynamic lift comprises a pair of wings which extend from opposite sides of the central body and are shaped to generate hydrodynamic lift as the sensor node moves through the water.

A further aspect of the invention provides a sensor node for acquiring seismic data from the seabed, the sensor node comprising a central body carrying at least one seismic sensor; a pair of wings which extend from opposite sides of the central body and are shaped to generate hydrodynamic lift as the sensor node moves through the water; and one or more coupling devices for coupling the sensor node to the seabed so that the seismic sensor can acquire seismic data from the seabed.

In order to penetrate the seabed, the coupling device preferably comprises a spike, a blade (preferably a serrated blade) or any other device with sharp edges or points suitable for penetrating the seabed.

The coupling device (or at least one of them) may be mounted to the central body. Alternatively the coupling devices may comprise a pair of wing coupling devices each extending down from the tip of a respective one of the wings. In a preferred embodiment the coupling devices comprise a central coupling device mounted to the central body; and a pair of wing coupling devices each extending down from the tip of a respective one of the wings. In this case the bottom edges of the three coupling devices may lie in the same plane.

Typically the seismic sensor comprises a geophone or hydrophone. Most preferably the seismic sensor comprises three orthogonally oriented geophones, optionally in combination with a hydrophone.

A further aspect of the invention provides a submersible vehicle comprising an annular hull with a central duct; a flexible tether for towing an object behind the vehicle; and a harness coupling the tether to the annular hull, the harness comprising two or more flexible harness lines which are coupled at one end to the hull and at the other end to the tether, wherein the harness lines are coupled to the hull at different points round the circumference of the duct.

The use of a harness to couple the tether to the annular hull provides the advantage that the force vector of the tether can be controlled by setting the coupling points and lengths of the harness lines. For instance the force vector may be aligned approximately with the centre of gravity of the vehicle to minimise the pitching moment created by the force vector.

In the embodiments described below, the harness has only two lines coupled to the hull on opposite sides of the duct. However the harness may have three or more lines if required, typically equally spaced round the circumference of the duct.

The object may be any object which requires towing through the water, and may or may not be deployed to the seabed or retrieved from the seabed by the vehicle. For instance the device may comprise a sensor for acquiring data such as seismic data, acoustic data, temperature data, pressure data, salinity data, or electromagnetic data (e.g. for detecting the passage of a submarine); or a communication node.

### BRIEF DESCRIPTION OF THE DRAWINGS

Embodiments of the invention will now be described with reference to the accompanying drawings, in which:
Figure 1 is a perspective view of a sensor node;
Figure 2 is a plan view of the sensor node;
Figure 3 is a front view of the sensor node;
Figure 4 is a side view of the sensor node;
Figures 5-8 are schematic side views showing the sensor node being deployed on the seabed;
Figure 9 is a schematic view showing the main functional elements of the sensor node and submersible vehicle;
Figure 10 shows a method of acquiring seismic data with an array of sensor nodes;
Figure 11 is a schematic side view showing the sensor node being lifted up from the seabed;
Figures 12-15 are schematic side views showing a string of sensor nodes being deployed on the seabed;
Figure 16 is a front view of a submersible vehicle;
Figure 17 is a front view of the vehicle with its propellers fully contra-directed;
Figure 18 is a starboard side view of the vehicle;
Figure 19 is a plan view of the vehicle;
Figure 20 is a starboard side view showing the vehicle towing a node;
Figure 21 is a starboard side view showing the vehicle towing a node with an alternative harness arrangement;
Figure 22 is a front view of the vehicle with its propellers omitted (for clarity) and showing the alternative harness arrangement;
Figure 23 is a plan view of the alternative harness arrangement, with the vehicle hull shown in dashed lines; and
Figure 24 is a sectional view showing the tether and connection piece.

### DETAILED DESCRIPTION OF EMBODIMENT(S)

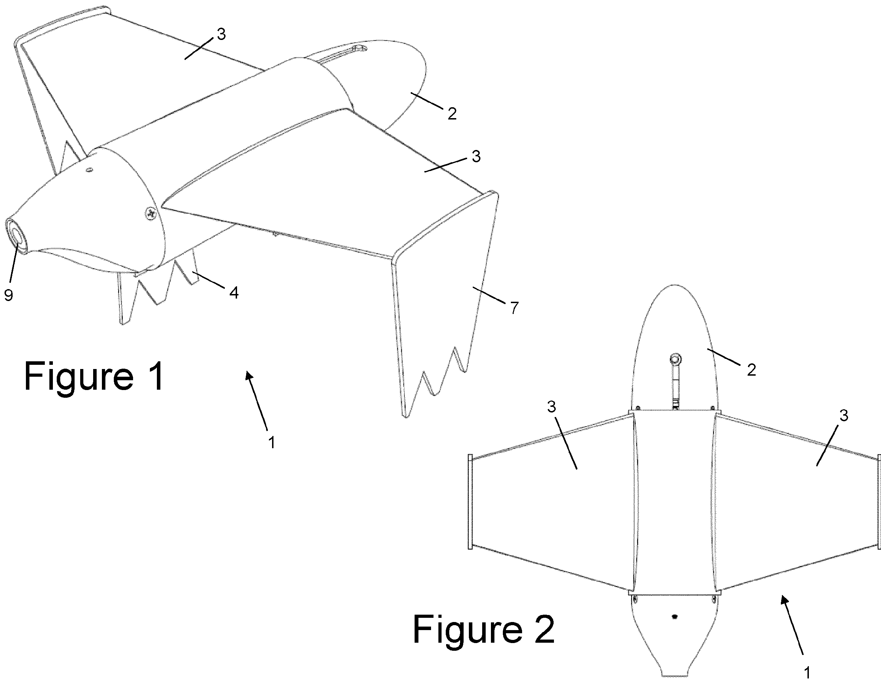

A sensor node 1 for acquiring seismic data from the seabed is shown in Figures 1-4. The sensor node comprises a cigar-shaped central body or fuselage 2. The nose of the central body 2 has a data port 9. A pair of wings 3 extend from opposite sides of the central body and are shaped to generate hydrodynamic lift as the sensor node moves through the water.

The wings 3 may be made from a variety of alternative materials, including for example Nylon, or a composite material. The composite material may comprise a sandwich composite with a pair outer skin layers formed from glass or carbon fibre reinforced polymer with a foam core.

The wings 3 may have a symmetrical cross-section, or a cambered and asymmetrical cross-section for maximising the lift generated by the wings.

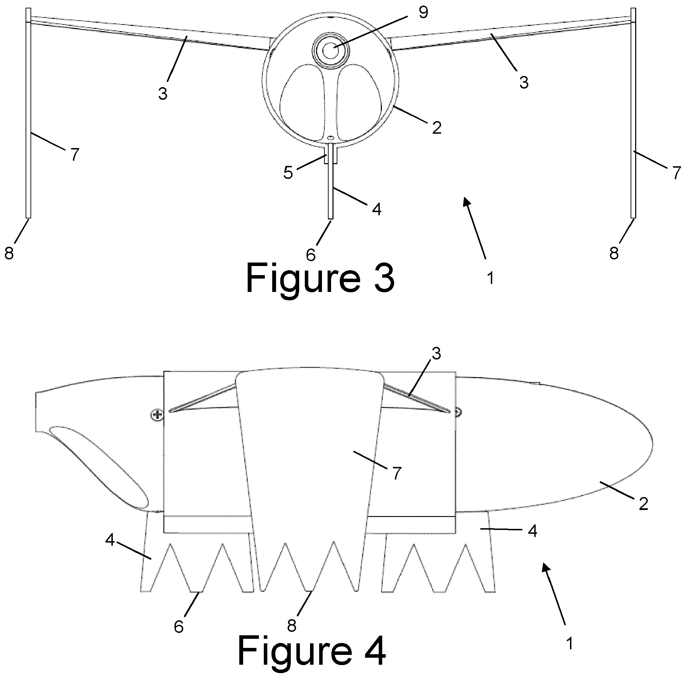

As shown in Figure 3, the wings have a small dihedral angle (i.e they are angled upwards). A dihedral angle is more preferred than an anhedral angle because it is more stable in tow.

A pair of central blades 4 are mounted to the central body 2 by mounting brackets 5. As shown in Figure 3 the central blades 4 extend vertically down from the underside of the body, and as shown in Figure 4 they terminate in a serrated cutting edge 6.

A pair of outer blades 7 extend vertically down from the tips of the wings and terminate in a serrated cutting edge 8. As shown in Figure 3 the serrated cutting edges 6,8 lie in the same plane.

The blades 4, 7 may be made from a variety of alternative materials, including for example Aluminium, composite, Nylon, HDPE, polycarbonate or stainless steel. Optionally the central blades 4 may be made from a heavier material than the outer blades 7 in order to increase the stability of the vehicle.

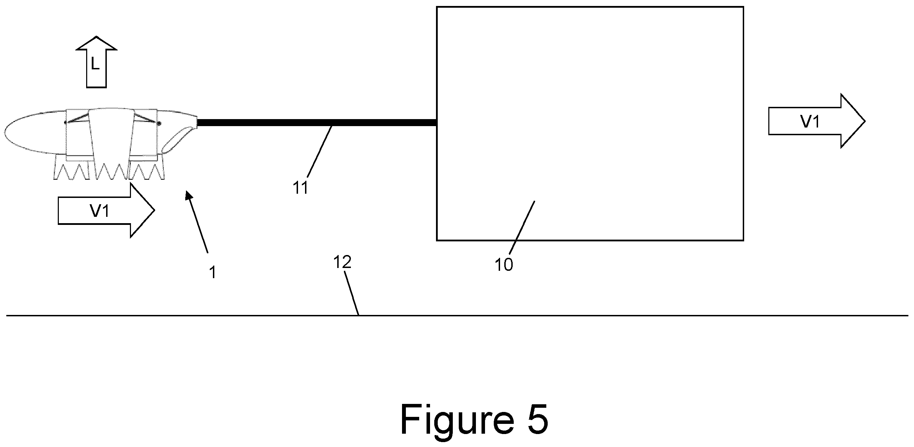

A method of deploying the sensor node 1 is shown in Figures 5-8. The sensor node 1 is towed behind an undersea vehicle 10 with a flexible tether 11 which is plugged into the data port 9. The tether has a core containing electrical and/or fibre-optic cables, one or more insulating sleeves, a reinforcement member made of braided Kevlar or a similar high strength material, and an outer protective sheath.

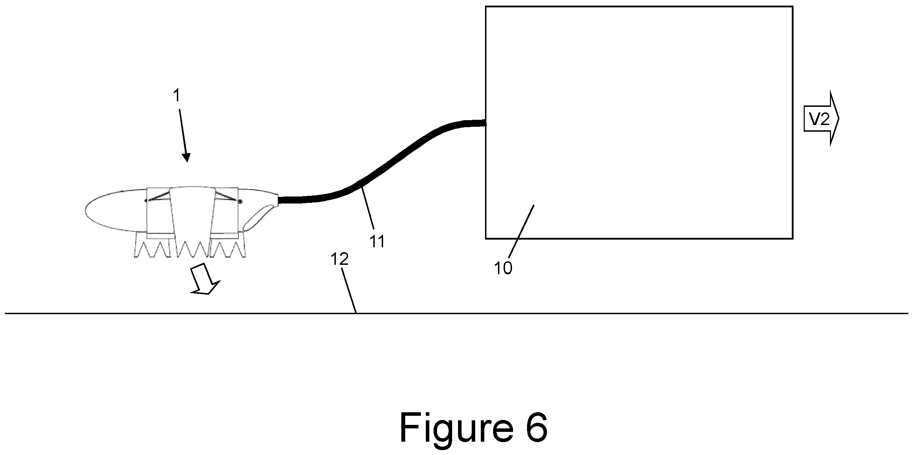

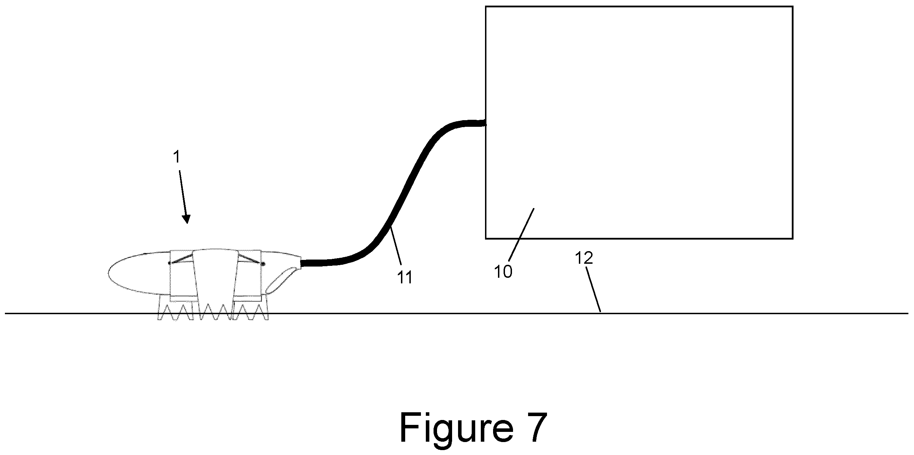

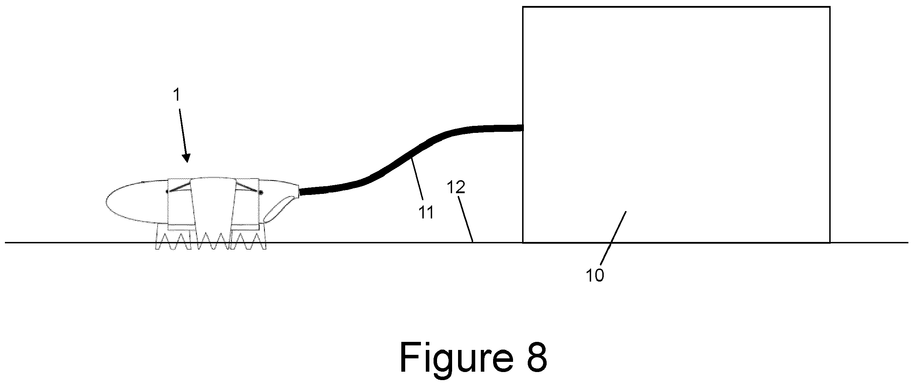

In the view of Figure 5 the vehicle 10 and the sensor node 1 are moving at the same velocity VI and the wings 3 are generating hydrodynamic lift L. As the vehicle approaches a point on the seabed 12 where the sensor is to be deployed, the vehicle decelerates to a velocity V2 which may be positive, zero or even slightly negative (i.e. to the left). The hydrodynamic lift generated by the wings 3 reduces and the towed sensor node sinks towards the seabed as shown in Figure 6 until the blades 4, 7 embed themselves into the seabed as shown in Figure 7. The vehicle 10 is then parked on the seabed adjacent to the sensor node as shown in Figure 8.

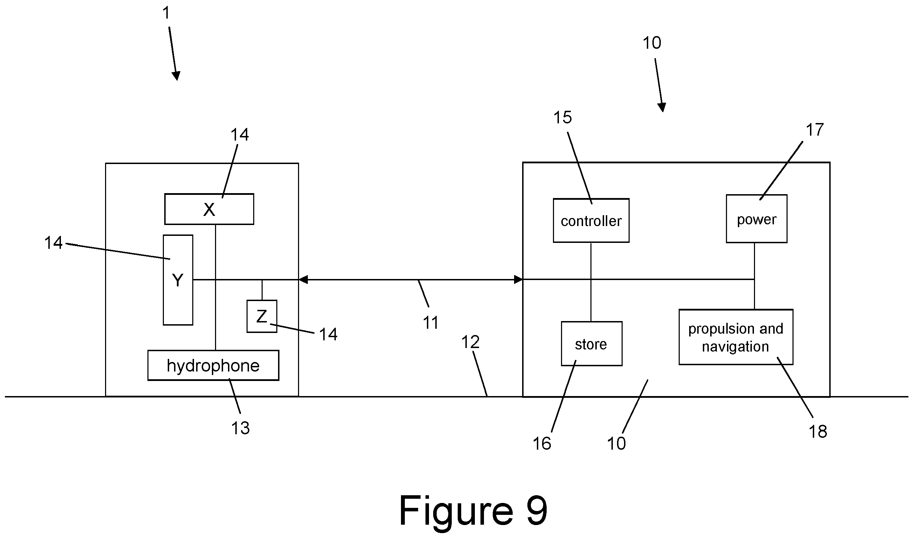

Figure 9 is a schematic diagram shown the main functional components of the node 1 and vehicle 10. The node 1 comprises a hydrophone 13 and a set of three orthogonally arranged geophones 14. The hydrophone 13 and geophones 14 are coupled to the electrical and/or fibre optic cables in the core of the tether 11 so that they can send and receive data to/from the vehicle 10. The vehicle comprises a controller 15 for generating and transmitting control signals to the node 1, and a store 16 for storing data received from the node 1. The vehicle 10 also comprises a power system 17 (typically comprising one or more batteries) and a propulsion and navigation system 18.

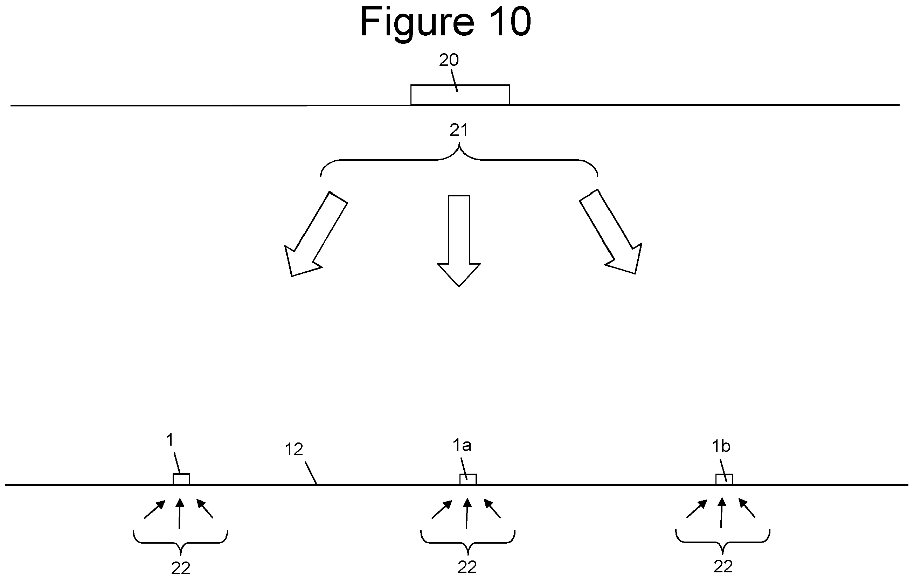

Figure 10 shows a method of acquiring seismic data with the node 1. The node 1 is one of many such nodes 1, 1a, 1b etc which are deployed from a surface vessel 20, each node 1, 1a, 1b being towed to the seabed 12 by its own dedicated submersible vehicle 10.

A seismic survey is then carried out by transmitting an acoustic pulse 21 from the surface vessel 20. Each node 1, 1a, 1b etc. then receives seismic waves 22 from the seabed which are transmitted to the onboard geophones and hydrophone via the coupling blades 4, 7. The geophones and hydrophone then generate data which is transmitted to the submersible vehicle via the tether for storage.

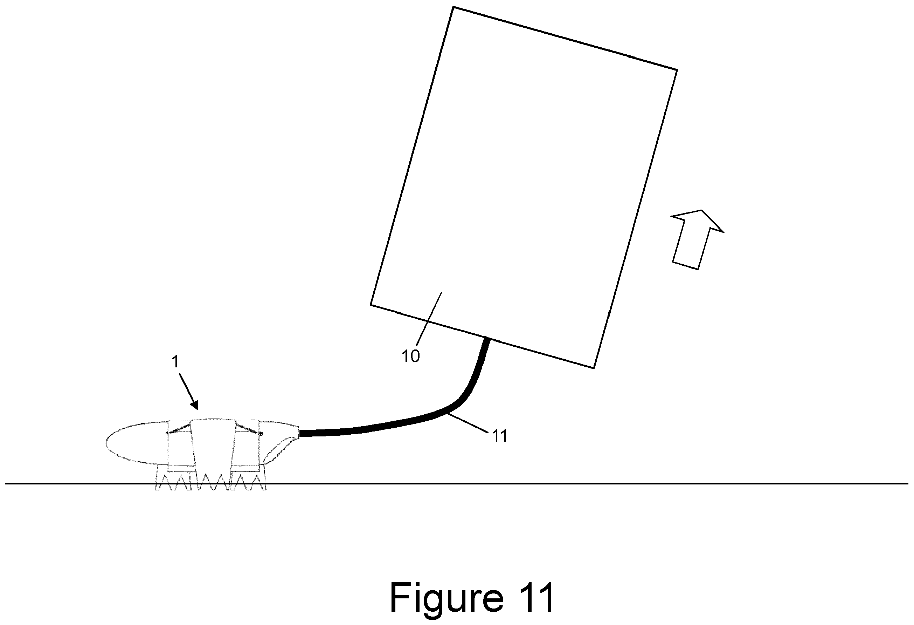

Once the survey is complete, each vehicle operates its propulsion system to move to the nose-up position shown in Figure 11 and pull its respective node 1 by its nose with the tether off the seabed. The vehicle then swims back up to the surface vessel 20.

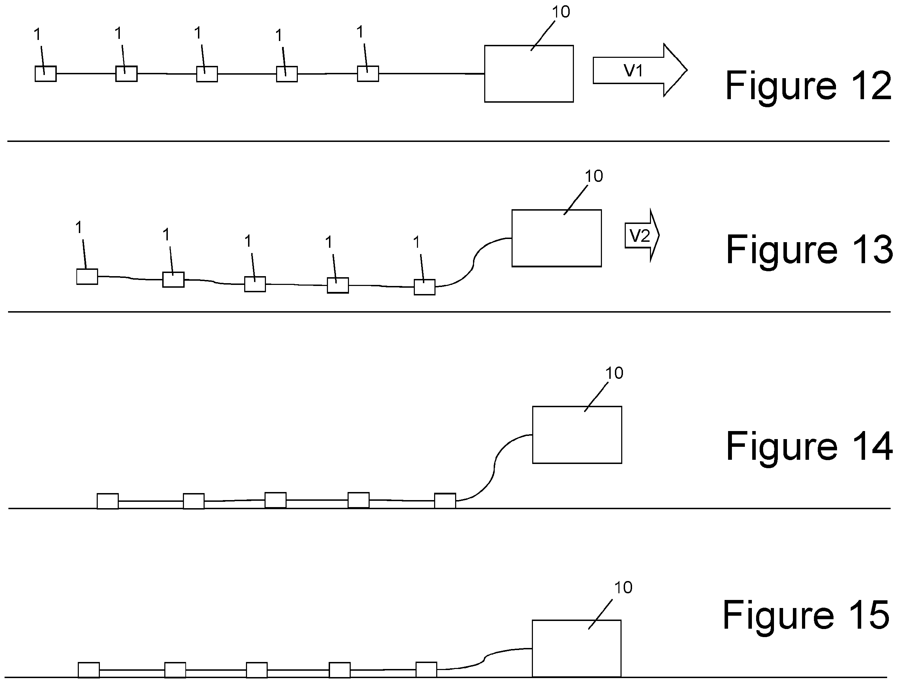

A method of deploying a string of sensor nodes 1 is shown in Figures 12-15. A number of sensor nodes are coupled nose-to-tail by flexible tethers, the front sensor node being connected to the vehicle 10.

In the view of Figure 12 the vehicle 10 and the sensor nodes are moving at the same velocity V1 and the wings 3 are generating hydrodynamic lift. As the vehicle approaches a point on the seabed where the sensor is to be deployed, the vehicle decelerates to a velocity V2 which may be positive, zero or even slightly negative. The hydrodynamic lift generated by the wings reduces and the towed sensor nodes sink towards the seabed as shown in Figure 13 until the blades 4, 7 embed themselves into the seabed as shown in Figure 14. The vehicle 10 is then parked on the seabed adjacent to the sensor nodes as shown in Figure 15.

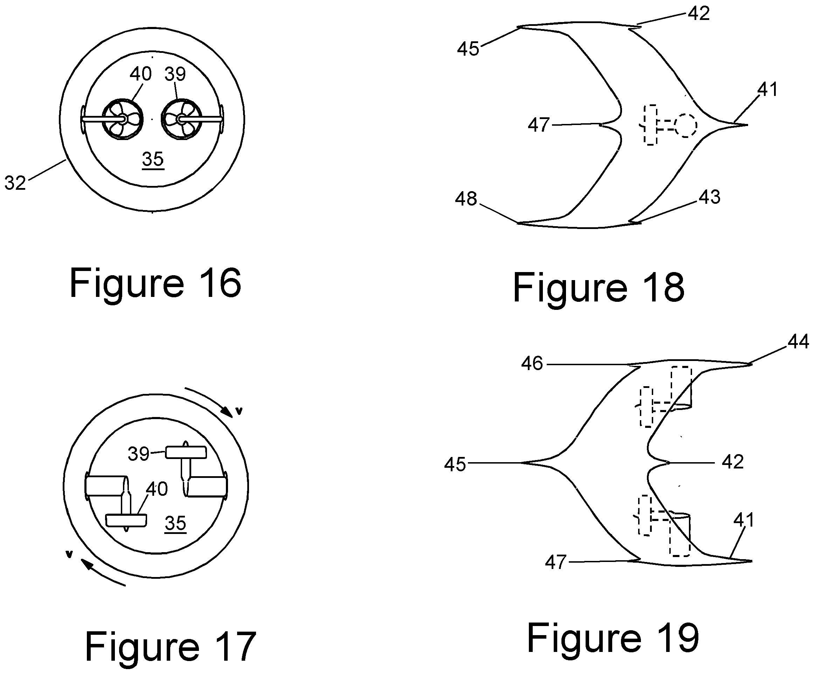

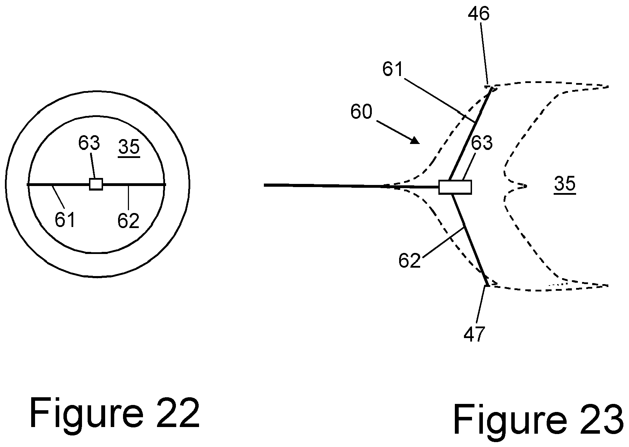

The vehicle 10 is only shown schematically in Figures 5-15 above, and Figures 16-23 show the vehicle 10 in more detail, including a harness for attaching the flexible tether to the vehicle.

The vehicle has an outer hull 32 which appears annular when viewed along the hull axis as shown in Figure 16 and 17. An inner wall of the annulus defines a duct 35 which is open fore and aft so that when the vehicle is submerged in water or any other liquid, the water floods the duct and flows through the duct as the vehicle moves through the water, generating hydrodynamic lift.

The hull has a hydrofoil section which tapers outwardly gradually from a narrow bow end (on the left of Figures 18 and 19) to a widest point, then tapers inwardly more rapidly to a stern end (on the right of Figures 18 and 19).

A pair of propulsors 39,40 are mounted symmetrically on opposite sides of the hull axis. The propulsors comprise propellers which are mounted on L-shaped support shafts which in turn are rotatably mounted to the hull as shown in Figure 19. The propellers are mounted within shrouds in such a way that their efficiency is increased. Each L-shaped shaft is pivotally mounted to the hull so that it can rotate by 360 degrees relative to the hull about an axis parallel to the pitch axis of the vehicle, thus providing thrust-vectored propulsion. Both the shroud and L-shaped shaft have a hydrofoil section using a ratio between chord length and height similar to that described for the outer hull. Thus for example the propulsors 39,40 can be rotated between the co-directed configuration shown in Figure 16, in which they provide a thrust force to propel the vehicle forward and along the hull axis, to the contra-directed configuration shown in Figure 17 in which they cause the vehicle to roll continuously around the hull axis. Arrows V in Figure 17 illustrate movement of the vehicle.

The vehicle uses four motors within its propulsion system: two brushless DC electric motors to drive the propellers, and two DC electric motors to drive the L-shaped support shafts upon which the propeller motors are mounted, where a mechanical worm drive gear reduction mechanism is used to transfer drive and loads between the motor and the L-shaped shafts.

The thrust vectored propulsors provide the means for motion along the hull axis, either forward or in reverse, and spin or roll around the hull axis, and pitch or yaw about the vehicle's CofG. As described earlier it is clear that the two propulsors may be contra-directed in order to induce vehicle roll. The two propulsors may also be co-directed. For instance when both are directed down so that their thrust vectors lies above the CofG, then the vehicle will pitch nose down. Similarly when the two propulsors are directed up so that their thrust vector lies below the CofG, then the vehicle will pitch nose up. It is also clear that varying degrees of propulsor pitch in relation to the vehicle and each other may be used to achieve vehicle pitch, roll and yaw. Yaw may also be induced by differential thrust application when differential propeller revolution rates are adopted. Thus it can be seen that the vehicle is able to dive, turn, roll and surface under its own autonomous control.

The hull adopts a swept-back shape to minimize vehicle drag; to reduce residual energy released into wake vortices; to provide for pitch and yaw stability; and to provide a novel mechanism for attitude control. Figure 18 is a view of the vehicle's starboard elevation in which the hull appears swept back, while Figure 19 is a plan view of the vehicle in which the hull appears swept forward. The outer hull houses various sensors, battery packs, and pressure vessels (not shown).

The hull has four bow apexes 41-44 and four stern apexes 45-48 which are separated by 90 degrees around the circumference of the duct.

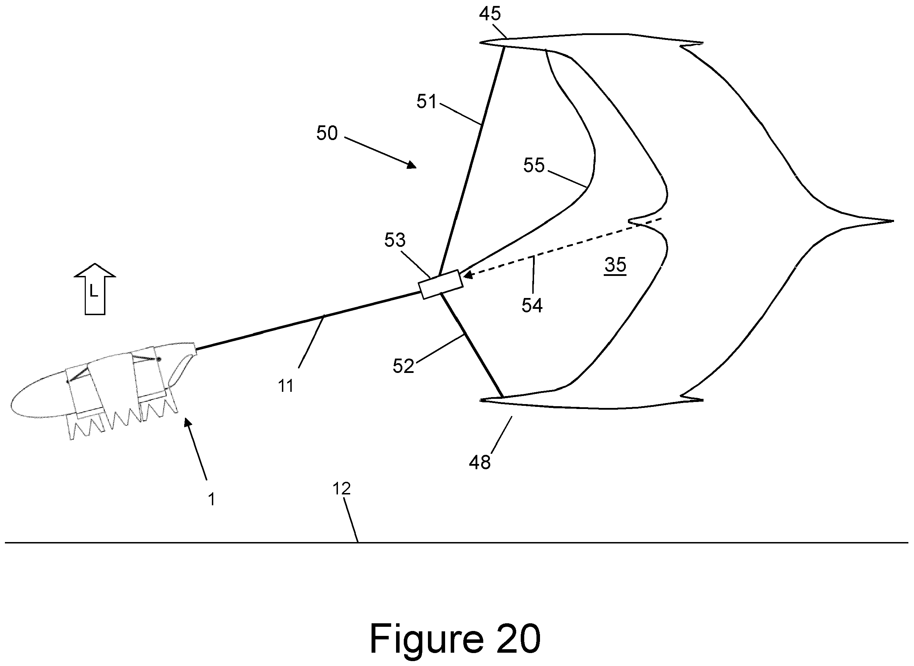

Figure 20 shows a first harness arrangement 50 for coupling the tether 11 to the annular hull. The harness 50 comprises an upper harness line 51 and a lower harness line 52 which are coupled at one end to the hull and at the other end to the tether 11 via a connection piece 53. The harness lines are coupled to the hull at opposite points round the circumference of the duct. In this case the upper line 51 is attached to the upper stern apex 45 and the lower line 52 is coupled to the lower stern apex 48. The harness lines 51,52, connection piece 53 and tether 11 are all positioned in line with the central duct 35.

The lower harness line 52 is shorter than the upper harness line 53 so that the force vector 54 of the tether 11 is approximately in line with the centre of gravity of the vehicle. This minimises the pitch moment created by the drag force of the node 1.

As mentioned above, the tether 11 has a core containing electrical and/or fibre-optic cables, and this core 55 is passed through the connection piece 53 and coupled to the vehicle hull. The harness lines 51,52 are in tension but the core 55 is slack.

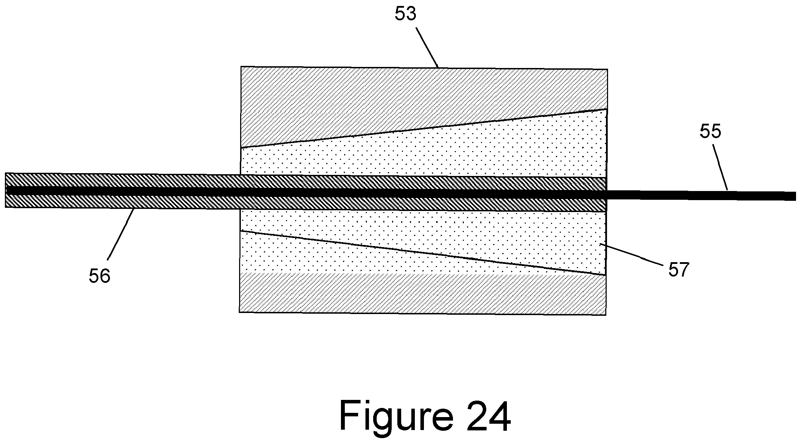

The harness lines 51,52 are made from Vectran (R) rope. The tether 11 and harness lines 51,52 may be coupled to the connection piece in a number of ways. For instance the harness lines 51,52 may be formed as a single piece of rope which is tied to the connection piece 53, for instance by a shackle. Figure 24 is a sectional view through the connection piece 53 showing how the tether 11 may be connected to it. The tether 11 comprises a core 55, and a reinforcement member 56 which is terminated as shown. The connection piece has a frustoconical bore containing potting compound 57 which bonds the tether to the connection piece.

Alternatively the connection piece 53 may be omitted entirely, and the reinforcement member 56 spliced directly into the harness lines 51,52, with a water-blocking compound preventing the ingress of water into the tether at the point where the member 56 is divided from the core 55.

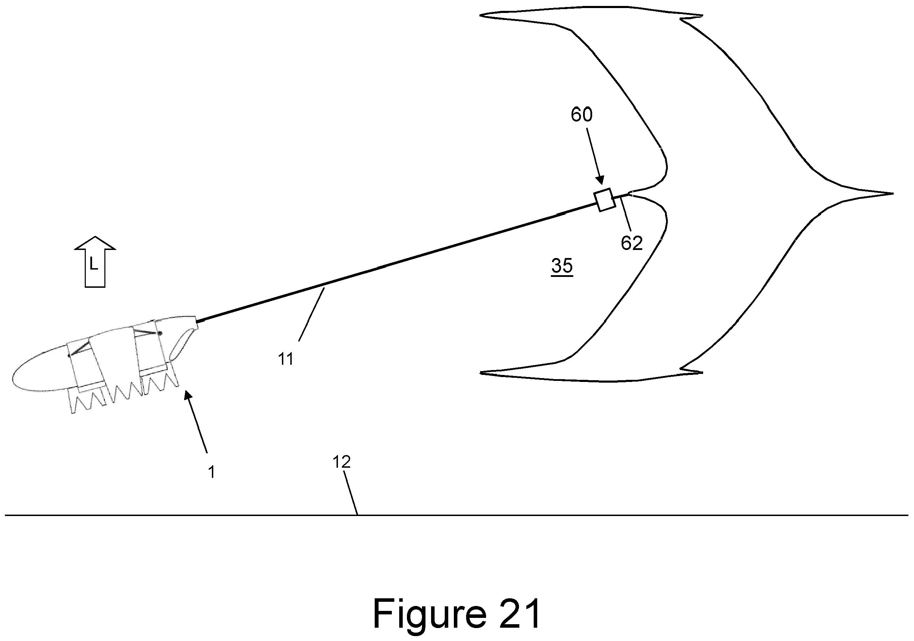

Figures 21-23 show an alternative harness arrangement. The harness 50 comprises a port harness line 61 and a starboard harness line 62 which are coupled at one to the hull and at the other end to the tether 11 via a connection piece 63. The harness lines are coupled to the hull at opposite points round the circumference of the duct. In this case the port line 61 is attached to the port stern apex 46 and the starboard line 62 is coupled to the starboard stern apex 47. The harness lines 61,62, connection piece 63 and tether 11 are all positioned in line with the central duct 35. The lines 61,62 are of the same length so that the force vector of the tether 11 is approximately in line with the centre of gravity of the vehicle.

The annular vehicle shape enables a relatively simple and light harness system to be used without impeding the performance of the vehicle. For instance because the propellers 39,40 are mounted within the duct forward of the harness lines, the rear-mounted harness lines do not impede the propulsion performance in any significant way. Also, because the thrust vector propulsion system requires no rear-mounted control fins for manoeuvring the vehicle, the harness lines do not impede the manoeuvring ability of the vehicle in any significant way.

Although the invention has been described above with reference to one or more preferred embodiments, it will be appreciated that various changes or modifications may be made without departing from the scope of the invention as defined in the appended claims.

## Claims

1. A sensor node (1) for acquiring seismic data from the seabed, the sensor node comprising a central body (2) carrying at least one seismic sensor (13, 14); a pair of wings (3) which extend from opposite sides of the central body and are shaped to generate hydrodynamic lift as the sensor node moves through the water; and one or more coupling devices (4, 7) for coupling the sensor node to the seabed so that the seismic sensor (13, 14) can acquire seismic data from the seabed.

2. The node of claim 1 wherein the coupling device (4, 7) comprises a serrated blade.

3. The node of claim 1 or 2 wherein the coupling device (4) is mounted to the central body.

4. The node of any of the preceding claims wherein the coupling devices comprise a pair of wing coupling devices (7) each extending down from the tip of a respective one of the wings.

5. The node of claim 3 and 4 wherein the coupling devices comprise a central coupling device (4) mounted to the central body; and a pair of wing coupling devices (7) each extending down from the tip of a respective one of the wings (3).

6. The node of any of the preceding claims wherein the coupling device has at least one sharp edge or point suitable for penetrating the seabed

7. The node of any of the preceding claims wherein the node is configured to receive seismic waves from the seabed which are transmitted to the seismic sensor via the one or more coupling devices.

8. The node of any of the preceding claims wherein the seismic sensor comprises a geophone (14) or hydrophone (13).

9. The node of any of the preceding claims wherein the seismic sensor comprises three orthogonally oriented geophones (14).

10. The node of any of the preceding claims wherein the wings (3) are made from a composite material.

11. The node of any of the preceding claims wherein the one or more coupling devices are made from Aluminium, composite, Nylon, HDPE, polycarbonate or stainless steel.

12. The node of any of the preceding claims wherein the wings (3) have a cambered and asymmetrical cross-section.

13. The node of any of the preceding claims wherein the wings (3) have a dihedral angle.

14. A method of carrying out a seismic survey, the method comprising: transmitting an acoustic pulse (21) from a surface vessel (20); receiving seismic waves (22) from the seabed at a sensor node (1) according to any of the preceding claims, wherein the sensor node comprises at least one seismic sensor (13, 14) and at least one coupling device (4, 7) coupling the sensor node to the seabed; transmitting the seismic waves (22) to the at least one seismic sensor via the at least one coupling device; and generating data with the at least one seismic sensor (13, 14).

15. A seismic data acquisition system comprising a submersible vehicle (10); a sensor node (1) according to any of claims 1 to 13; and a flexible tether (11) for connecting the sensor node to the vehicle.
